(19) Europäisches Patentamt
European Patent Office
Office européen des brevets

(11) **EP 1 383 250 B1**

(12) **EUROPÄISCHE PATENTSCHRIFT**

(45) Veröffentlichungstag und Bekanntmachung des Hinweises auf die Patenterteilung:
**01.02.2006 Patentblatt 2006/05**

(51) Int Cl.:
***H04B 7/06*** *(2006.01)*

(21) Anmeldenummer: **02016035.4**

(22) Anmeldetag: **18.07.2002**

(54) **Verfahren zur dynamischen Anpassung einer Strahlformung in einem Funk-Kommunikationssystem**

Dynamical beam forming adaptation method in a radio communication system

Procédé d'adaptation dynamique de la formation de faisceaux dans un système de communication radio

(84) Benannte Vertragsstaaten:
**AT BE BG CH CY CZ DE DK EE ES FI FR GB GR IE IT LI LU MC NL PT SE SK TR**

(43) Veröffentlichungstag der Anmeldung:
**21.01.2004 Patentblatt 2004/04**

(73) Patentinhaber: **SIEMENS AKTIENGESELLSCHAFT 80333 München (DE)**

(72) Erfinder: **Seeger, Alexander, Dr. 85622 Feldkirchen (DE)**

(56) Entgegenhaltungen:
**DE-A- 10 032 426      US-A1- 2002 009 156**

## Beschreibung

Die Erfindung betrifft ein Verfahren zur dynamischen Anpassung einer Strahlformung in einem Funk-Kommunikationssystem, insbesondere in einem Mobilfunksystem.

In Funk-Kommunikationssystemen werden Nachrichten (Sprache, Bildinformation oder andere Daten) über Übertragungskanäle mit Hilfe von elektromagnetischen Wellen (Funkschnittstelle) übertragen. Die Übertragung erfolgt sowohl in Abwärtsrichtung (Downlink) von der Basisstation zu dem Teilnehmer-Endgerät, als auch in Aufwärtsrichtung (Uplink) von dem Teilnehmer-Endgerät zur Basisstation.

Signale, die mit den elektromagnetischen Wellen übertragen werden, unterliegen bei ihrer Ausbreitung in einem Ausbreitungsmedium u.a. Störungen durch Interferenzen. Störungen durch Rauschen können u.a. durch Rauschen der Eingangsstufe des Empfängers entstehen. Durch Beugungen und Reflexionen durchlaufen Signalkomponenten verschiedene Ausbreitungswege. Dies hat zum einen die Folge, dass ein Signal mehrfach, jeweils aus unterschiedlichen Richtungen, mit unterschiedlichen Verzögerungen, Dämpfungen und Phasenlagen, am Empfänger ankommen kann, und zum anderen können sich Beiträge des Empfangssignals kohärent mit wechselnden Phasenbeziehungen beim Empfänger überlagern und dort zu Auslöschungseffekten auf einem kurzfristigen Zeitmaßstab (Fast Fading) führen.

Für die Abwärtsrichtung, also von Basisstation zum Teilnehmer-Endgerät, treten besondere Schwierigkeiten auf, insbesondere dann, wenn für die Abwärtsrichtung eine Strahlformung mit Hilfe mehrerer Antennenelemente an der Basisstation vorgesehen ist. Diese Strahlformung wird vor der Beeinflussung der übertragenen Signale durch den Funkkanal vorgenommen, d.h. die Parameter der Strahlformung müssen vor der Ausstrahlung bekannt und festgelegt sein. Diese Parameter der Strahlformung sollten für eine optimale Versorgung der Teilnehmer-Endgeräte aber vom Übertragungskanal in Abwärtsrichtung abhängen. Die Basisstation müsste also die Kanalparameter grundsätzlich schon vor der Übertragung kennen, was nicht möglich ist. Für dieses grundsätzliche Problem werden verschiedene Lösungsansätze verfolgt.

Bei Funk-Kommunikationssystemen, die für Uplink und Downlink unterschiedliche Frequenzen verwenden (Frequency Division Duplex FDD), können die Ausbreitungsbedingungen für Uplink und Downlink unterschiedlich sein. Messungen der Ausbreitungsbedingungen, die einen Rückschluss auf Werte von Strahlformungsparametern erlauben, mit denen an dem Teilnehmer-Endgerät ein guter Empfang möglich ist, werden daher zweckmäßigerweise vom Teilnehmer-Endgerät durchgeführt.

Aus DE 198 03 188 ist ein Verfahren bekannt, bei dem eine räumliche Kovarianzmatrix für eine Verbindung von einer Basisstation zu einem Teilnehmer-Endgerät bestimmt wird. In der Basisstation wird ein Eigenvektor aus der Kovarianzmatrix berechnet und für die Verbindung als ein Strahlformungsvektor verwendet. Die Sendesignale für die Verbindung werden mit dem Strahlformungsvektor gewichtet und Antennenelementen zur Abstrahlung zugeführt. Die Kovarianzmatrix kann aus geschätzten Kanalimpulsantworten der Verbindung zwischen Basisstation und Teilnehmer-Endgerät bestimmt werden. Insbesondere können die Kanalimpulsantworten aus Trainingssequenzen bestimmt, die von der Basisstation gesendet werden und die im Teilnehmer-Endgerät bekannt sind.

Auch A. Narula et al., "Efficient Use of Side Information in Mutiple-Antenna Data Transmission over Fading Channels" , IEEE Journal on Selected Areas in Communications, Vol. 16, No. 8, October 1998, S. 1423 - 1436 beschreibt das Problem der Strahlformung für eine Verbindung von einer Basisstation zu einem Teilnehmer-Endgerät. Es wird dabei dargestellt, dass zur Strahlformung bei der Basisstation die Kenntnis der Verbindungsparameter (Kanalkenntnis) für die Verbindung erforderlich ist. Idealerweise wird auch hier die Kenntnis einer räumlichen Kovarianzmatrix für die Verbindung ausgeführt, wobei der beste Strahlformungsvektor derjenige Eigenvektor der Kovarianzmatrix ist, der den größten Eigenwert aufweist. Die Strahlformung erfolgt z.B. auf Basis von Rückkopplungsinformationen. Es werden ferner die Möglichkeiten einer verrauschten Kanalinformation und einer quantisierten Kanalinformation diskutiert. Bei einer quantisierten Kanalinformation wird eine N-Bit-Darstellung eines Kanalvektors gewählt und damit der Raum, der durch diese Kanalvektoren aufgespannt wird, quantisiert. Es wird festgestellt, dass ein verbessertes Signal-Rausch-Verhältnis durch eine größere Zahl von Bits (also durch eine größere Bandbreite) zur Übertragung der Rückkopplungsinformationen erzielt werden kann. Dies ist jedoch je nach Funk-Kommunikationssystem und Bewegungszustand der Teilnehmer-Endgeräte nur bedingt möglich.

Die Druckschrift DE 100 32 426 A1 beschreibt die Problematik einer optimalen Strahlformung in einem Funk-Kommunikationssystem durch eine Basisstation mit einer Antenneneinrichtung, welche mehrere Antennenelemente aufweist. Als ein besonderes Problem wird dabei auf die Auslöschungseffekte durch kohärente Überlagerung von Anteilen eines Signals mit wechselnden Phasenbeziehungen aufgrund unterschiedlicher Ausbreitungswege (Fast Fading) eingegangen. Es wird dort vorgeschlagen, durch Teilnehmer-Endgeräte in einer Initialisierungsphase erste Gewichtungsvektoren für die gerichtete Abstrahlung bzw. einen gerichteten Empfang der Antennenelemente zu definieren und die Werte der Komponenten der ersten Gewichtungsvektoren als Rückkopplungsinformationen an die Basisstation zu übertragen. In der Arbeitsphase wird dann ein aktueller optimaler Gewichtungsvektor seitens des Teilnehmer-Endgerätes durch Auswahl eines der ersten Gewichtungsvektoren oder durch eine Linearkombination der ersten Gewichtungsvektoren festgelegt und es werden dann lediglich die Bezeichnungen der entsprechenden ersten Gewichtungsvektoren als Rückkopplungsinformationen an die Basisstation übertragen, oder im Fall einer Linearkombination die Beträge und Phasen der Gewichtungskoeffizienten der Linearkombination, was einen geringeren Signalisierungsaufwand für die Übertragung der Rückkopplungsinformationen bedeutet als die komplette Übertragung der Werte der Komponenten von Gewichtungsvektoren. Damit kann in der Arbeitsphase die Bandbreite, die zur Signalisierung der gewünschten Gewichtungsvektoren an die Basisstation benötigt wird, reduziert werden. Es können von dem Teilnehmer-Endgerät auch die Gewichtungsvektoren im Zeitmultiplex mit den Bezeichnungen der Gewichtungsvektoren übertragen werden, wobei das Verhältnis der Zahl der Zeitschlitze für Gewichtungsvektor-Informationen zu der Zahl der Zeitschlitze für Bezeichnungsinformationen dynamisch in Abhängigkeit von der Geschwindigkeit des Teilnehmer-Endgerätes variieren kann.

Nach der DE 100 32 426 A1 können in der Initialisierungsphase die ersten Gewichtungsvektoren seitens des Teilnehmer-Endgerätes insbesondere als Eigenvektoren einer ersten räumlichen Kovarianzmatrix eines empfangenen Signals in Abwärtsrichtung (Downlink) von der Basisstation zum Teilnehmer-Endgerät bestimmt werden. Diese erste Kovarianzmatrix kann über eine Vielzahl von Zeitschlitzen des Downlink-Signals gemittelt werden und es können aus der Gesamtheit der Eigenvektoren der ersten Kovarianzmatrix vor allem diejenigen Eigenvektoren mit den größten Eigenwerten als Gewichtungsvektoren ermittelt werden, da diese den Ausbreitungswegen mit der geringsten Dämpfung entsprechen. Zur Ermittlung des aktuellen Gewichtungsvektors wird in der Arbeitsphase geprüft, welcher der ersten Gewichtsvektoren oder der möglichen Linearkombinationen beim momentanen Kanalzustand (fast fading) die größte Signalleistung am Teilnehmer-Endgerät erreicht. Die Kanalschätzwerte der einzelnen Antennenelemente können durch separate Trainingssequenzen pro Antennenelement ermittelt werden.

Ein Problem bei der Strahlformung mit Hilfe von Messungen, die am Teilnehmer-Endgerät durchgeführt werden, ist, dass nur eine sehr begrenzte Bandbreite zur Verfügung steht, um die Ergebnisse solcher Messungen als Rückkopplungsinformationen an die Basisstation zu übertragen. So ist beispielsweise im Rahmen von zukünftigen Funk-Kommunikationssystemen der dritten Generation (UMTS) nur ein Bit pro Zeitschlitz für diese Rückkopplungsinformation vorgesehen.

Diese Tatsache wirft erhebliche praktische Probleme auf, denn die Wirksamkeit der Strahlformung zur Empfangsverbesserung steht und fällt mit der Aktualität der für die Strahlformung verwendeten Parameter. Diese können sich aber je nach Einsatzbedingungen der Teilnehmer-Endgeräte unterschiedlich schnell ändern. Bewegt sich das Teilnehmer-Endgerät nicht oder nur langsam, so ändern sich auch die Parameter nur langsam. In einer solchen Situation steht ausreichend Zeit zur Verfügung, um sie mit hoher Auflösung von dem Teilnehmer-Endgerät an die Basisstation zu übertragen und den Downlink-Strahl der Basisstation exakt zu steuern. Bewegt sich aber das Teilnehmer-Endgerät schnell, so ändern sich auch die Parameter schnell. Eine hochauflösende Übertragung birgt dann die Gefahr, dass ein Parameterwert, nachdem er endlich vollständig übertragen worden ist, längst nicht mehr der aktuellen Empfangssituation am Teilnehmer-Endgerät entspricht.

Aus der US 2002/0009156 A1 ist ein Verfahren und ein System für eine Sende-Diversität bekannt, bei dem ein Sendesignal von einem Sender zu einem Empfänger gemäß einer Gewichtungsinformation übertragen wird, wobei die Gewichtungsinformation aus einer Rückkopplungsinformation des Empfängers abgeleitet wird. Alternativ hierzu kann die Gewichtungsinformation in dem Sender mittels einer Filterung und Quantisierung der Rückkopplungsinformationen gewonnen werden.

Aufgabe der vorliegenden Erfindung ist es, ein verbessertes und variables Verfahren zum Steuern der Strahlformung einer Basisstation in Abhängigkeit von Rückkopplungsinformationen bereit zu stellen.

Diese Aufgabe wird gelöst durch die Merkmale der unabhängigen Patentansprüche gelöst. Vorteilhaft Weiterbildungen der Erfindung sind den abhängigen Patentansprüchen entnehmbar.

Die Erfindung umfasst ein Verfahren zum Steuern der Strahlformung eines Nachrichtensignals in einem Funk-Kommunikationssystem. Das Nachrichtensignal wird dabei von einer Basisstation an ein Teilnehmer-Endgerät ausgestrahlt. Als Teilnehmer-Endgeräte können dabei jede Art mobiler oder standortgebundener Endgeräte in Frage kommen. Basisstationen können alle Arten mobiler oder standortgebundener Sende-/Empfangseinrichtungen eines Funk-Kommunikationssystems sein, die als zentrale Einrichtung Funkverbindungen zu mehreren Teilnehmer-Endgeräten aufbauen können.

Die Strahlformung erfolgt auf Basis von Strahlformungsparametern, die von dem Teilnehmer-Endgerät ermittelt werden und als Rückkopplungsinformationen an die Basisstation übertragen werden. Eine Möglichkeit zur Durchführung eines solchen Verfahren ist bereits detailliert in DE 100 32 426 A1 beschrieben, es sind aber grundsätzlich auch alternative Ausführungsformen zur detaillierten Durchführung eines solchen Verfahrens möglich, die beispielsweise andere Arten oder Darstellungen von Rückkopplungsinformationen vorsehen als in der DE 100 32 426 A1 beschrieben.

Gemäß der Erfindung ist nun vorgesehen, dass von der Basisstation in Abhängigkeit von ermittelten zeitlichen Änderungen der Empfangsverhältnisse am Teilnehmer-Endgerät Auswahlkriterien zur Auswahl definierter Rückkopplungsinformationen festgelegt werden und die ausgewählten Rückkopplungsinformationen der Strahlformung zu Grunde gelegt werden. Das erfindungsgemäße Verfahren erlaubt damit seitens der Basisstation eine dynamische Anpassung der Strahlformung an aktuelle Änderungen der Empfangsverhältnisse am Teilnehmer-Endgerät und damit eine dynamische Optimierung des Strahlformungsverfahrens, welche auf die tatsächlichen Verhältnisse am Teilnehmer-Endgerät eingeht.

Vom Teilnehmer-Endgerät können insbesondere solche Rückkopplungsinformationen übertragen werden, die quantisierte Einstellungen von Linearkombinationen von Eigenvektoren einer vom Teilnehmer-Endgerät ermittelten räumlichen Kovarianzmatrix der Ausstrahlung des Nachrichtensignals an das Teilnehmer-Endgerät repräsentieren. Eine solche Art von Rückkopplungsinformationen ist beispielsweise aus der bereits zitierten DE 100 32 426 A1 bekannt. Für Details zur Erzeugung solcher Kovarianzmatrizen und der entsprechenden Eigenvektoren kann daher beispielhaft auf die DE 100 32 426 A1 verwiesen werden. Die Rückkopplungsinformationen können dann entweder analog der DE 100 32 426 A1 Komponenten oder Beschreibungen von Eigenvektoren enthalten oder sie können andere geeignete Parametrisierungen oder Quantisierungen der gewonnenen Eigenvektor-Informationen beinhalten.

Eine Quantisierung der Einstellungen von Linearkombinationen von Eigenvektoren erfolgt nach der Erfindung dadurch, dass eine Transformation der Komponenten von Linearkombinationen von Eigenvektoren der räumlichen Kovarianzmatrix auf eine Kugelfläche in einem reellwertigen Koordinatenraum erfolgt und als quantisierte Einstellungen eine Repräsentation von auf der Kugelfläche liegenden Koordinatenpunkten gewählt wird. Hierbei wird einerseits eine Transformation der in der Regel komplexwertigen Komponenten der Eigenvektoren bzw. der daraus erzeugten Linearkombinationen auf ein reellwertigen Koordinaten erreicht. Bei einer geeigneten Wahl einer solchen Transformation kann überdies auch die Zahl der Freiheitsgrade auf das tatsächlich nötige Maß reduziert werden, da die komplexwertigen Komponenten der Eigenvektoren Freiheitsgrade wie Phaseninformationen enthalten, die zum Teil auf die hier dargestellte Problematik keinen Einfluss haben. Durch die Transformation auf eine Kugelfläche lassen sich die so erzeugten Koordinatenpunkte als einfach quantisierbare Repräsentationen fassen, z.B. durch eine Repräsentation der relativen Lage der Koordinatenpunkte im Verhältnis zu einem festen Bezugspunkt des reellwertigen Koordinatenraumes.

Die Erfindung umfasst weiterhin eine alternative Ausführungsform, bei der von der Basisstation in Abhängigkeit von einer ermittelten Geschwindigkeit des Teilnehmer-Endgerätes Auswahlkriterien zur Auswahl definierter Rückkopplungsinformationen festgelegt werden und die ausgewählten Rückkopplungsinformationen der Strahlformung zu Grunde gelegt werden. Die ermittelte Geschwindigkeit des Teilnehmer-Endgerätes kann insbesondere als ein Indikator für das Maß der zeitlichen Änderung von Empfangsverhältnissen an dem Teilnehmer-Endgerät herangezogen werden. Damit kann auf einfache Weise eine dynamische Anpassung der zu berücksichtigenden Rückkopplungsinformationen an die speziellen Empfangsverhältnisse an dem Teilnehmer-Endgerät erfolgen, ohne dass eine zusätzliche, explizite Signalisierung zwischen Basisstation und Teilnehmer-Endgerät erforderlich ist, die überdies eine zusätzliche mögliche Fehlerquelle im Funk-Kommunikationssystem darstellen würde. Es muss folglich nicht, wie bei der DE 100 32 426, eine dynamische Anpassung der vom Teilnehmer-Endgerät übertragenen Informationen mit aufwändigen Zeitmultiplex-Verfahren erfolgen, sondern es können die Teilnehmer-Endgeräte in konstanter Weise Rückkopplungsinformationen übertragen und es wird lediglich seitens der Basisstation durch geeignete Auswahlkriterien festgelegt, welche Rückkopplungsinformationen verwendet werden. Die geschwindigkeitsabhängigen Auswahlkriterien dienen zur selektiven Auswahl solcher Rückkopplungsinformationen, die die besten Eignung zur Bestimmung aktueller Strahlformungsparameter besitzen.

Als Weiterbildung eines der vorgenannten Verfahren wird bevorzugt vorgesehen, dass von der Basisstation in Abhängigkeit von ermittelten zeitlichen Änderungen der Empfangsverhältnisse und/oder in Abhängigkeit von einer ermittelten Geschwindigkeit des Teilnehmer-Endgerätes eine variable Menge von Dateneinheiten der Rückkopplungsinformationen ausgewählt und der Strahlformung zu Grunde gelegt wird. Als Dateneinheit kann beispielsweise ein Bit, ein Byte, ein Symbol oder jede andere geeignete Dateneinheit definiert werden. Bewegt sich ein Teilnehmer-Endgerät mit geringer Geschwindigkeit, so ändern sich die Empfangsverhältnisse an dem Teilnehmer-Endgerät nur wenig. So wird bevorzugt eine größere Menge von Dateneinheiten der Rückkopplungsinformationen berücksichtigt, damit an der Basisstation die Information zur Strahlformung mit höherer Auflösung bestimmt werden können, wobei gleichzeitig noch eine ausreichende Aktualität der zur Strahlformung berücksichtigten Rückkopplungsinformationen garantiert wird. Bewegt sich dagegen ein Teilnehmer-Endgerät mit höherer Geschwindigkeit, so kann die Menge der zu berücksichtigenden Dateneinheiten reduziert werden. Damit wird den sich schnell ändernden Empfangsverhältnissen an dem Teilnehmer-Endgerät Rechnung getragen. Es kann insbesondere in diesem Fall jeweils nur eine Menge der aktuellsten Dateneinheiten berücksichtigt werden, um einen kurzen Aktualisierungszyklus der Strahlformungsparameter zu erzielen.

Es kann außerdem vorgesehen werden, dass durch die Basisstation eine unterschiedliche Gewichtung verschiedener Dateneinheiten der ausgewählten Rückkopplungsinformationen erfolgt. Durch eine solche Gewichtung können solche Dateneinheiten höher gewichtet werden, von denen bekannt ist oder angenommen wird, dass sie einen besseren Beitrag zur Bestimmung der optimalen Strahlformungsparameter liefern.

Dabei kann insbesondere die Gewichtung abhängig von der Empfangszeit der Dateneinheiten an der Basisstation erfolgen. Bei weitgehend üblichen Empfangsverhältnissen im Funk-Kommunikationssystem werden bevorzugt diejenigen Dateneinheiten höher gewichtet, die zu einer späteren Empfangszeit empfangen wurden, und diejenigen Dateneinheiten geringer gewichtet, die zu einer früheren Empfangszeit empfangen wurden. Damit kann auch bei Berücksichtigung einer größeren Menge von Dateneinheiten der höheren Aktualität der zuletzt empfangenen Dateneinheiten Rechnung getragen werden, was letztlich wiederum eine exaktere Bestimmung der optimalen Strahlformungsparameter erlaubt.

Die Geschwindigkeit des Teilnehmer-Endgerätes kann grundsätzlich mit allen geeigneten Verfahren bestimmt werden. Bevorzugt wird die Geschwindigkeit des Teilnehmer-Endgerätes aus Parametern einer Übertragung eines Funksignals von dem Teilnehmer-Endgerät zu der Basisstation ermittelt. Dies hat den Vorteil, dass keine zusätzliche Signalisierung oder sonstiger übermäßiger Verfahrensaufwand erforderlich ist, sondern es können Informationen verwendet werden, die ohnehin im Funk-Kommunikationssystem vorliegen. So kann die Geschwindigkeit des Teilnehmer-Endgerätes beispielsweise aus Dopplerfrequenz-Messungen, Signallaufzeit-Messungen, Signalintensitätsmessungen oder ähnlichem für eine Übertragung eines Funksignals von dem Teilnehmer-Endgerät zu der Basisstation ermittelt werden.

Bevorzugt wird eine solche Quantisierung vorgesehen, bei der jede Dateneinheit (also beispielsweise jedes Bit) der Rückkopplungsinformationen ein Paar einander bezüglich des Zentrums der Kugelfläche gegenüberliegender Koordinatenpunkte auf der Kugelfläche repräsentiert. Es wird also jeder Dateneinheit, beispielsweise einem Bit, genau ein Paar von Koordinatenpunkten fest zugeordnet und damit genügt bereits der Informationsgehalt eines einzigen Bit zur eindeutigen Identifizierung eines der beiden Koordinatenpunkte auf der Kugelfläche, unter Berücksichtigung der bekannten Transformation also zur eindeutigen Identifizierung einer bestimmten Linearkombination der Eigenvektoren der räumlichen Kovarianzmatrix. Mehrere aufeinanderfolgende Dateneinheiten können also jeweils zur Auswahl von alternativen, quantisierten Einstellungen zwischen jeweils zwei gegenüberliegenden Koordinatenpunkten auf der Kugelfläche verwendet werden. Der Informationsgehalt der Dateneinheiten untereinander ist dabei voneinander unabhängig, da jede Dateneinheit für sich eine Auswahl von alternativen, quantisierten Einstellungen zwischen jeweils zwei gegenüberliegenden Koordinatenpunkten repräsentiert. Eine Basisstation gewinnt damit an Genauigkeit, wenn sie mehrere Dateneinheiten der Rückkopplungsinformationen mit dieser Art der Quantisierung auswertet, aber ein Verfahren zur Steuerung der Strahlformung ist auch dann noch durchführbar, wenn aktuell jeweils nur eine einzige Dateneinheit der Rückkopplungsinformationen berücksichtigt wird.

Die Werte der übertragenen Rückkopplungsinformationen können einerseits nach einer diskreten Quantisierung ausgewählt und als solche eindeutig definiert übertragen werden, wie sie bereits grundsätzlich aus dem oben zitierten Stand der Technik bekannt ist. Die Werte der übertragenen Rückkopplungsinformationen können aber auch nach einer Wahrscheinlichkeitsverteilung ausgewählt werden, wobei die Wahrscheinlichkeiten für die Wahl bestimmter Werte von den aktuell bestimmten Parameterwerten abhängen. Die übertragenen Werte selbst können dabei weiterhin quantisiert vorliegen. Es wird aber dann durch eine zeitliche Mittlung über mehrere übertragene Werte der Rückkopplungsinformationen aufgrund der Verteilung der Werte entsprechend der Wahrscheinlichkeitsverteilung eine Übertragung von Werten eines praktisch kontinuierlichen Wertebereiches möglich. Dies kann wiederum dazu genutzt werden, die optimalen Strahlformungsparameter möglichst genau zu bestimmen, was bei Übertragung streng quantisierter Werte der Rückkopplungsinformationen nicht mit der gleichen Genauigkeit möglich ist.

Ein weiterer Gegenstand der vorliegenden Erfindung ist ein Funk-Kommunikationssystem mit Einrichtungen zum Steuern der Strahlformung eines Nachrichtensignals, welches von einer Basisstation des Funk-Kommunikationssystems an ein Teilnehmer-Endgerät ausgestrahlt wird. Das Funk-Kommunikationssystem weist dabei Einrichtungen zur Ermittlung von Strahlformungsparametern als Rückkopplungsinformationen und Antennenelementen zur Strahlformung auf Basis der Rückkopplungsinformationen auf. Beispiele für solche Funk-Kommunikationssysteme sind aus dem o.g. Stand der Technik bekannt. Es sind aber auch andere Arten von Funk-Kommunikationssystemen mit solchen Einrichtungen denkbar, als sie aus dem zitierten Stand der Technik bekannt sind. So können beispielsweise die Einrichtungen in gewissen Grenzen auch an anderen Stellen in dem Funk-Kommunikationssystem angeordnet sein oder sie können zur Verarbeitung von anderen Arten von Rückkopplungsinformationen ausgebildet sein.

Die vorliegende Erfindung sieht nun Einrichtungen zur Ermittlung von zeitlichen Änderungen der Empfangsverhältnisse am Teilnehmer-Endgerät vor, die mit den Einrichtung zum Steuern der Strahlformung datentechnisch verbunden sind. Die Einrichtungen zur Ermittlung der Strahlformungsparameter sind ausgebildet zur Festlegung von Auswahlkriterien zur Auswahl definierter Rückkopplungsinformationen in Abhängigkeit von zeitlichen Änderungen der Empfangsverhältnisse an einem Teilnehmer-Endgerät. Weiterhin sind die Einrichtungen zum Steuern der Strahlformung dazu ausgebildet, der Strahlformung die ausgewählten Rückkopplungsinformationen zu Grunde zu legen.

Ein letzter Gegenstand der vorliegenden Erfindung ist ebenfalls ein Funk-Kommunikationssystem mit Einrichtungen zum Steuern der Strahlformung eines Nachrichtensignals, welches von einer Basisstation des Funk-Kommunikationssystems an ein Teilnehmer-Endgerät ausgestrahlt wird. Das Funk-Kommunikationssystem weist dabei Einrichtungen zur Ermittlung von Strahlformungsparametern als Rückkopplungsinformationen und Antennenelementen zur Strahlformung auf Basis der Rückkopplungsinformationen auf. Beispiele für solche Funk-Kommunikationssysteme sind, wie bereits festgestellt, aus dem o.g. Stand der Technik bekannt. Es sind aber auch andere Arten von Funk-Kommunikationssystemen mit solchen Einrichtungen denkbar, als sie aus dem zitierten Stand der Technik bekannt sind. So können beispielsweise die Einrichtungen in gewissen Grenzen auch an anderen Stellen in dem Funk-Kommunikationssystem angeordnet sein oder sie können zur Verarbeitung von anderen Arten von Rückkopplungsinformationen ausgebildet sein. Dieses Funk-Kommunikationssystem kann insbesondere nach Art des vorgenannten Funk-Kommunikationssystems ausgebildet sein.

Die vorliegende Erfindung sieht nun Einrichtungen zur Ermittlung der Geschwindigkeit eines Teilnehmer-Endgerätes vor, die mit den Einrichtung zum Steuern der Strahlformung datentechnisch verbunden sind, so dass zwischen diesen Einrichtungen ein Datenaustausch von Informationen über die Geschwindigkeit eines Teilnehmer-Endgerätes erfolgen kann. Weiterhin ist vorgesehen, dass die Einrichtungen zur Ermittlung der Strahlformungsparameter ausgebildet sind zur Festlegung von Auswahlkriterien zur Auswahl definierter Rückkopplungsinformationen in Abhängigkeit von einer ermittelten Geschwindigkeit eines Teilnehmer-Endgerätes. Zu geeigneten Auswahlkriterien und deren Vorteilen wird auf die vorstehenden Ausführungen zum erfindungsgemäßen Verfahren verwiesen. Schließlich ist vorgesehen, dass die Einrichtungen zum Steuern der Strahlformung dazu ausgebildet sind, der Strahlformung die ausgewählten Rückkopplungsinformationen zu Grunde zu legen.

Durch diese Maßnahmen, die im Rahmen der vorgenannten Funk-Kommunikationssysteme realisiert werden, kann eine verbesserte Bestimmung der optimalen Strahlformungsparameter erfolgen, wie bereits analog zum oben dargestellten Verfahren erläutert wurde.

Nachfolgend wird anhand der Figuren 1 bis 5 ein spezielles Ausführungsbeispiel für die vorliegende Erfindung anhand eines Mobilfunksystems dargestellt. Das hier dargestellte Ausführungsbeispiel baut auf wesentlichen technischen Ideen der DE 100 32 426 A1 auf.

Es zeigen:

FIG 1: Schematische Darstellung eines Mobilfunksystems

FIG 2: Darstellung einer Einheitskugel im transformierten Eigenvektorraum

FIG 3: Darstellung des Hin- und Herschaltens ausgewählter Punkte auf der Einheitskugel

FIG 4: Wahrscheinlichkeitsverteilung für die Auswahl bestimmter Bitwerte der Rückkopplungsinformationen bei statistischer Modulation

FIG 5: Ergebnisse des Verfahrens für verschiedene Konstellationen als Funktion der Geschwindigkeit eines Teilnehmer-Endgerätes

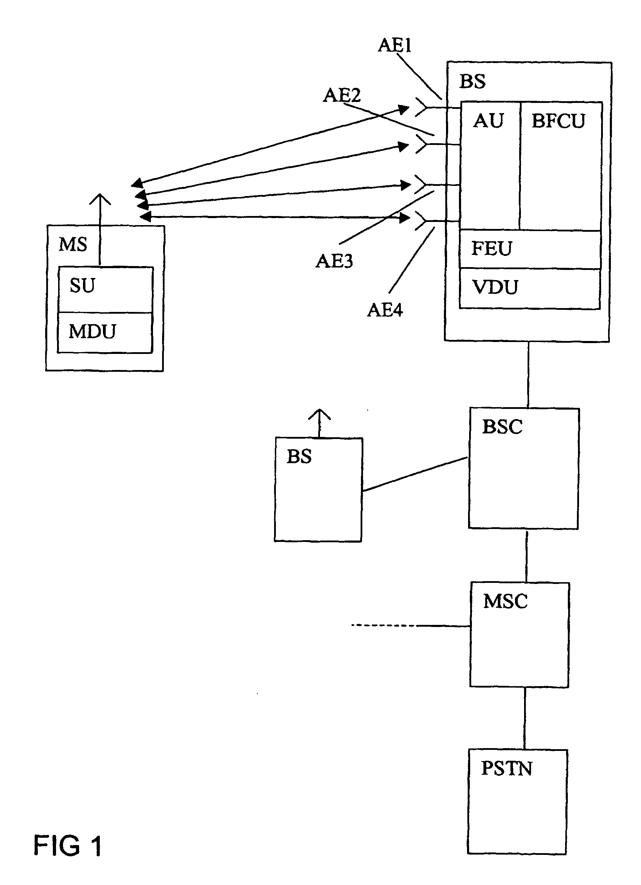

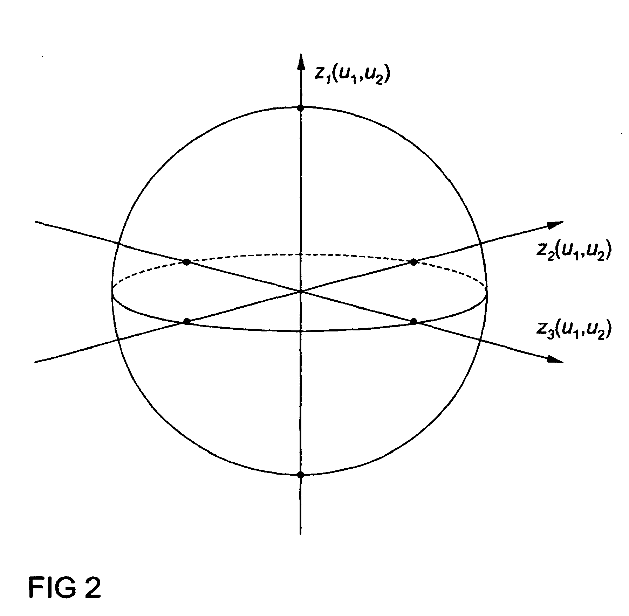

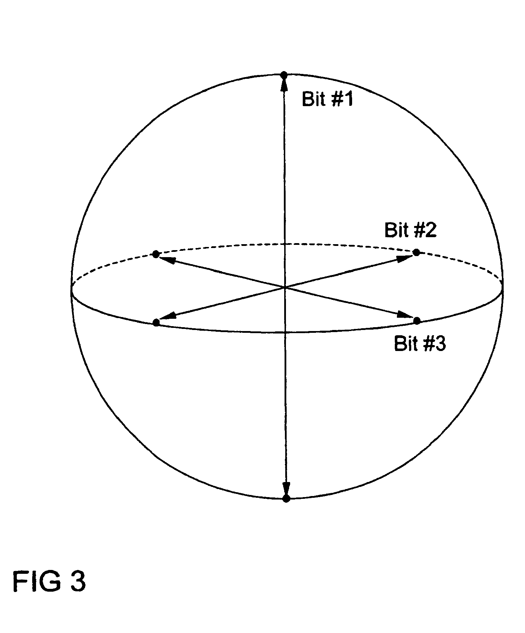

Figur 1 zeigt die Struktur eines Funk-Kommunikationssystems, bei dem das erfindungsgemäße Verfahren anwendbar ist. Es besteht aus einer Vielzahl von Mobilvermittlungsstellen MSC, die untereinander vernetzt sind bzw. den Zugang zu einem Festnetz PSTN herstellen. Weiterhin sind diese Mobil-Vermittlungsstellen MSC mit jeweils zumindest einem Basisstationscontroller (Base Station Controller) BSC verbunden. Jeder Basisstationscontroller BSC ermöglicht wiederum eine Verbindung zu zumindest einer Basisstation (Base Station) BS. Eine solche Basisstation BS kann über eine Funkschnittstelle eine Nachrichtenverbindung zu mobilen Teilnehmer-Endgeräten (Mobile Station) MS aufbauen. Hierfür sind wenigstens einzelne der Basisstationen BS mit Antenneneinrichtungen (Antenna Unit) AU ausgerüstet, die mehrere Antennenelemente (Antenna Elements) AE1, AE2, AE3, AE4 zur Strahlformung aufweisen. Für Details zum Aufbau einer solchen Basisstation wird auf den Stand der Technik verwiesen. Solche Details sind beispielsweise in DE 100 32 426 A1 anhand der dortigen FIG 2 erläutert. Die DE 100 32 426 A1 beschreibt auch anhand der dortigen FIG 3 Details zum Aufbau eines mobilen Teilnehmer-Endgerätes MS, das mit einer genannten Basisstation BS zusammenwirken kann. Im folgenden soll daher aus Gründen der Vereinfachung nur auf die wesentlichen technischen Ideen der Erfindung eingegangen werden, durch die der genannte Stand der Technik verbessert wird.

Das Teilnehmer-Endgerät weist neben anderen Einrichtungen eine Einrichtung (Matrix Determination Unit) MDU zur Bestimmung räumlicher Kovarianzmatrizen für die Downlink-Verbindung von der Basisstation BS zum Teilnehmer-Endgerät MS auf, wie bereits grundsätzlich aus dem Stand der Technik bekannt, beispielsweise aus der DE 100 32 426 A1. Das Teilnehmer-Endgerät MS führt also für die Downlink-Verbindung von der Basisstation BS zum Teilnehmer-Endgerät MS eine Kanalschätzung durch und bildet daraus einen Vektor mit den entsprechenden Kanalschätzwerten. Die Bestimmung der Kanalschätzung kann insbesondere über spezielle Trainingssequenzen erfolgen, die dem Teilnehmer-Endgerät MS bekannt sind. Dabei werden idealerweise für jedes Antennenelement AE individuelle Trainingssequenzen verwendet, um gezielt für jedes Antennenelement den jeweiligen Kanalzustand bestimmen zu können. Aus den Kanalschätzvektoren können durch inneres Produkt und zeitliche Mittelung Kovarianzmatrizen gebildet werden.Entsprechend den bereits bekannten Verfahren aus dem Stand der Technik können daraus Eigenvektoren als Strahlformungs-Vektoren ermittelt werden.

Wie ebenfalls aus dem Stand der Technik bekannt, wird die Verbindung zwischen der Basisstation BS und dem Teilnehmer-Endgerät MS durch Kurzzeit-Effekte wie Fast Fading und durch Langzeiteffekte beeinflusst. Um vor allem die Langzeit-Effekte zu ermitteln, die für die Definition der Eigenvektoren besonders relevant sind, wird bevorzugt eine zeitliche Mittelung über mehrere Kovarianzmatrizen durchgeführt. Den Kurzzeit-Effekten wie Fast Fading wird dann idealerweise dadurch Rechnung getragen, dass zwischen alternativen Einstellungen oder Linearkombinationen der definierten Eigenvektoren hin-und hergeschaltet wird.

Auf Basis der Ergebnisse der Kanalschätzung des Teilnehmer-Endgerätes MS, also auf Basis der Ermittlung der Kovarianzmatrizen und der Eigenvektoren, übermittelt eine Signalisierungs-Einrichtung (Signalling Unit) SU des Teilnehmer-Endgerätes MS geeignete Rückkopplungsinformationen (Feedback) an die Basisstation BS. Im folgenden werden rein schematisch anhand der Blockdiagramm-Darstellung in FIG 1 die wesentlichen Funktionalitäten der Basisstation BS erläutert, die für die Durchführung der vorliegenden Erfindung verwendet werden. Diese Funktionalitäten können in der Basisstation durch separate, speziell ausgebildete Einrichtungen realisiert werden, sie können aber auch durch bereits üblicherweise in der Basisstation BS vorhandene Einrichtungen realisiert werden, die lediglich zur Durchführung der entsprechenden Funktionalitäten angepasst werden.

Die Basisstation BS weist zunächst eine Einrichtung (Velocity Determination Unit) VDU zur Bestimmung der Geschwindigkeit des Teilnehmer-Endgeräte MS auf. Diese Geschwindigkeit kann auf Basis von Verbindungsparametern der Uplink-Verbindung zwischen Teilnehmer-Endgerät MS und Basisstation BS, insbesondere aus Dopplerfrequenz-Schätzungen ermittelt werden. Weiterhin weist die Basisstation BS eine Einrichtung (Feedback Evaluation Unit) FEU auf, die die vom Teilnehmer-Endgerät empfangenen Rückkopplungsinformationen auswertet und entsprechende Strahlformungsparameter ermittelt. Die Einrichtung FEU ist in diesem Rahmen dazu ausgelegt, Auswahlkriterien zur Auswahl definierter Rückkopplungsinformationen in Abhängigkeit von der ermittelten Geschwindigkeit des Teilnehmer-Endgerätes MS festzulegen. Die Einrichtung FEU führt also letztlich eine geeignete Filterung der empfangenen Rückkopplungsinformationen durch. Es wird dabei je nach Geschwindigkeit eine bestimmte Anzahl von Bits der Rückkopplungsinformationen geeignet ausgewählt, wie im Weiteren noch detailliert erläutert werden soll. Schließlich weist die Basisstation BS eine Einrichtung (Beam Forming Control Unit) BFCU zur Steuerung der Strahlformung der Antenneneinrichtung AU auf. Die Einrichtung BFCU legt der Strahlformung die ausgewählten Rückkopplungsinformationen in Form von Strahlformungsparametern zu Grunde. Es werden für die Strahlformung geeignete Einstellungen oder Linearkombinationen, also geeignete Gewichtungsinformationen der definierten Eigenvektoren festgelegt, bevorzugt in Form von Gewichtungsvektoren. Die Strahlformung erfolgt dann durch eine entsprechende Ansteuerung der Antennenelemente AE1, AE2, AE3, AE4.

Der Rückkopplungskanal besitzt nur eine limitierte Übertragungskapazität bzw. Bandbreite. So ist im Rahmen von UMTS-Mobilfunksystemen, also Mobilfunksystemen der dritten Generation, nur ein Bit pro Zeitschlitz für Rückkopplungsinformationen vorgesehen, wobei ein Zeitschlitzrahmen 15 Zeitschlitze umfasst. Diese limitierte Bandbreite macht es unmöglich, gleichzeitig sehr präzise und sehr aktuelle Informationen der Kanalschätzung an die Basisstation BS zu übertragen, weshalb in der Basisstation eine optimale Einstellung von Gewichtungsvektoren nur bedingt realisiert werden kann. Ein bestmöglicher Kompromiss kann jedoch in Abhängigkeit von der jeweiligen Geschwindigkeit des Teilnehmer-Endgerätes MS getroffen werden. Bei niedrigen Geschwindigkeiten ändern sich die Kanaleigenschaften des Downlink-Kanals nur wenig, so dass für die zur Strahlformung eine größere Zahl von Gewichtungsvektoren und/oder mit einer höheren Auflösung gewählt werden kann, also letztlich eine größere Anzahl von Bits der Rückkopplungsinformationen für die Gewichtungsvektoren zur Strahlformung herangezogen werden kann. Bewegt sich jedoch das Teilnehmer-Endgerät MS mit höherer Geschwindigkeit, so wird bevorzugt eine geringere Zahl von Gewichtungsvektoren und/oder mit einer geringeren Auflösung für die Strahlformung verwendet. Es wird also letztlich eine geringere Zahl von Bits der Rückkopplungsinformationen für den jeweiligen Strahlformungsschritt herangezogen. Dies führt zu einer variablen Einstellung der Zahl und/oder Auflösung der verwendeten Gewichtungsvektoren der Strahlformung in Abhängigkeit von der jeweiligen Geschwindigkeit des Teilnehmer-Endgerätes MS.

Es wird nun eine effektive und variable Möglichkeit zur Steuerung der Strahlformung beschrieben. Diese Möglichkeit erlaubt auf einfache Weise eine Strahlformung unter Kombination von bereits definierten Eigenvektoren. Es wird dabei eine geeignete Darstellung von Gewichtungsvektoren in einem dreidimensionalen Koordinatenraum verwendet.

Das vorgeschlagene Verfahren betrifft Operationen, die in dem Vektorraum ablaufen, der durch die Eigenvektoren der Strahlformung aufgespannt wird. Zunächst soll der Fall möglicher Kombinationen von zwei Eigenvektoren betrachtet werden. Daraus ergeben sich variabel auswählbare Kombinationsschemata, wobei deren Auswahl abhängig von der Geschwindigkeit des Teilnehmer-Endgerätes MS erfolgt. Es werden dabei Gewichtungsvektoren für die Strahlformung angewandt, wobei jeder mögliche Gewichtungsvektor sich in folgender Form darstellen lässt:

$$\mathbf{w} = \mathbf{V}\mathbf{u} = \mathbf{v}_1 u_1 + \mathbf{v}_2 u_2 , \qquad\qquad (1)$$

Hierbei stellen die Vektoren $v_1$ und $v_2$ die Eigenvektoren zu den größten Eigenwerten der Kovarianzmatrix dar. Weiter sind $u_1$ und $u_2$ die Linearkombinationsfaktoren. Für das Signal, das von dem Teilnehmer-Endgerät empfangen wird, ergibt sich daraus:

$$y = \sqrt{P_T}\,\mathbf{w}^H \mathbf{h} s + n$$
$$= \sqrt{P_T}\left(u_1^* \mathbf{v}_1^H \mathbf{h} + u_2^* \mathbf{v}_2^H \mathbf{h}\right)\cdot s + n \qquad (2)$$
$$= \sqrt{P_T}\left(u_1^* a_1 + u_2^* a_2\right)\cdot s + n.$$

Wobei $\mathbf{h}$ den Kanalvektor beschreibt und $\mathbf{w}$ den Gewichtsvektor darstellt. Zur Vereinfachung der Darstellung wird ein Kanal a in dem Eigenvektor-Raum definiert durch:

$$\mathbf{a} = \begin{bmatrix} a_1 \\ a_2 \end{bmatrix} = \begin{bmatrix} \mathbf{v}_1^H \mathbf{h} \\ \mathbf{v}_2^H \mathbf{h} \end{bmatrix}. \qquad (3)$$

Der optimale Gewichtungsvektor im Vektorraum der Eigenvektoren, welcher im Idealfall von der Basisstation BS für die Strahlformung zu verwenden wäre, kann dann berechnet werden als:

$$\mathbf{u} = \frac{1}{\|\mathbf{a}\|}\mathbf{a}. \qquad (4)$$

Beide Kanalparameter $a_1$ und $a_2$ sind komplex-gaussverteilt, so dass sich für diese Kanalparameter insgesamt 4 Freiheitsgrade ergeben. Die Phase des seitens des Teilnehmer-Endgerätes MS empfangenen Signals $y$, welches in Gleichung (2) dargestellt ist, hat aber keinen Einfluss auf die empfangene Signalleistung $|y|^2$, so dass letztlich nur 3 Freiheitsgrade wirklich relevant sind. Es soll daher die folgende Transformation zweier komplexwertiger Parameter $a_1$ und $a_2$ in drei reelwertige Koordinaten betrachtet werden:

$$\mathbf{z}(a_1,a_2) = \begin{bmatrix} z_1(a_1,a_2) \\ z_2(a_1,a_2) \\ z_3(a_1,a_2) \end{bmatrix} = \frac{1}{\|\mathbf{a}\|}\begin{bmatrix} \mathbf{a}^H \begin{bmatrix} 1 & 0 \\ 0 & -1 \end{bmatrix}\mathbf{a} \\ \mathbf{a}^H \begin{bmatrix} 0 & 1 \\ 1 & 0 \end{bmatrix}\mathbf{a} \\ \mathbf{a}^H \begin{bmatrix} 0 & -j \\ j & 0 \end{bmatrix}\mathbf{a} \end{bmatrix} = \frac{1}{\|\mathbf{a}\|}\begin{bmatrix} |a_1|^2 - |a_2|^2 \\ 2\,\mathrm{Re}\{a_1^* a_2\} \\ 2\,\mathrm{Im}\{a_1^* a_2\} \end{bmatrix} \qquad (5)$$

Nach einer solchen Transformation enthält $z_1(\mathbf{a})$ die Information über das Verhältnis der Signalleistungen zwischen $a_1$ und $a_2$ und $\arctan(z_2(a)/z_3(a))$ beschreibt deren Phasenverschiebung. Außerdem ist die Transformation verlustlos, denn es gilt:

$$\|\mathbf{z}(\mathbf{a})\|^2 = z_1^2(a_1,a_2) + z_2^2(a_1,a_2) + z_3^2(a_1,a_2) = \|\mathbf{a}\|^2. \qquad (6)$$

Wenn man annimmt, dass $a_1$ und $a_2$ statistisch unabhängig sind (was für Eigenvektoren immer erfüllt ist) und außerdem gleichverteilt sind (d.h. die entsprechenden Eigenwerte sind identisch), dann ist die gemeinsame dreidimensionale Wahrscheinlichkeitsdichtefunktion von $\mathbf{z}(a_1,a_2)$ isotrop.
Es soll nun die $z()$-Transformation auf den Vektor u angewandt werden. Aus der Definition von Gleichung (4) ergibt sich, dass $\|\mathbf{u}\|^2$ immer gleich 1 ist. Folglich muss das gleiche auch für $\|\mathbf{z(u)}\|^2$ gelten. Damit sind die Werte von **z**(u) gleichförmig über die Einheitskugel im Eigenvektorraum verteilt, die in FIG 2 dargestellt ist. Mögliche Darstellungen von Gewichtungsvektoren als Kombinationen zweier Eigenvektoren lassen sich also in dem in FIG 2 gezeigten Koordinatensystem als **z** ($u_1$, $u_2$) darstellen, wobei die möglichen Werte **z** ($u_1$, $u_2$) auf der in FIG 2 dargestellten Einheitskugel liegen.

Es sollen nun verschiedene Kombinationsschemata erläutert werden, die variabel ausgewählt werden können.

Das Teilnehmer-Endgerät MS muss die Basisstation BS über die aktuell ermittelten Wert für ($u_1$, $u_2$) durch entsprechende Rückkopplungsinformationen (Feedback Information) informieren, wobei die Bandbreite für den Rückkopplungskanal bei UMTS auf ein Bit pro Zeitschlitz begrenzt ist. Es erfolgt bevorzugt die Auswahl eines diskreten Satzes von Punkten auf der Einheitskugel, also die Auswahl einer Konstellation von Punkten auf der Einheitskugel, um die möglichen Punkte auf der Einheitskugel und damit die möglichen Kombinationen der Einheitsvektoren zur Bildung eines Gewichtungsvektors zu begrenzen und damit die nötige Signalisierung zu vereinfachen. Die Konstellation dieses diskreten Satzes von Punkten könnte grundsätzlich gleichmäßig über die Einheitskugel verteilt sein.

Für eine möglichst einfache Darstellung wird jedoch bevorzugt in einem ersten, einfachsten Fall ein beliebiges Paar von Punkten gewählt, die einander auf der Einheitskugel gegenüber liegen. Es kann dann das eine Bit pro Zeitschlitz dazu verwendet werden, eine Signalisierung vom Teilnehmer-Endgerät MS an die Basisstation BS zu übermitteln, die dazu dient, zwischen diesen beiden Punkten (und damit zwischen den entsprechenden Kombinationen der Einheitsvektoren) hin- und herzuschalten. Dies ist aus FIG 3 entnehmbar für das Hin- und Herschalten für Bit #1. Ein solches Kombinationsschema ist für hohe Geschwindigkeiten des Teilnehmer-Endgerätes anwendbar, da es in einem sehr schnellen Aktualisierungszyklus (einmal pro Zeitschlitz) resultiert. Die Information über den optimalen Gewichtungsvektor und damit über die optimalen Werte ($u_1$, $u_2$) kann damit nur mit sehr grober Auflösung übermittelt werden.

Für geringere Geschwindigkeiten werden jedoch bevorzugt Konstellationen mit mehr als zwei Punkte auf der Einheitskugel ausgewählt, die in der Basisstation BS eine höhere Auflösung für die Werte des optimalen Gewichtungsvektors erlauben. Es kann statt einer Konstellation von nur zwei Punkten auf der Einheitskugel dann eine Konstellation von vier oder acht Punkten auf der Einheitskugel gewählt werden, die dann zur Signalisierung entsprechen zwei oder drei Bit erfordert. Ein solches Beispiel einer Konstellation von acht Punkten ist in FIG 3 dargestellt. Zur Signalisierung der Rückkopplungsinformationen werden dann die drei Bits Bit #1, Bit #2 und Bit #3 verwendet. Allerdings beansprucht dann auch der Aktualisierungszyklus eine längere Zeitdauer, nämlich entsprechend zwei oder drei Zeitschlitze, was aber im Fall langsam bewegter Teilnehmer-Endgeräte MS nicht kritisch ist.

Es werden also variable Konstellationen vorgesehen, denen Auswahlkriterien seitens der Basisstation BS zu Grunde liegen und die je nach aktueller Geschwindigkeit des Teilnehmer-Endgerätes MS angepasst werden. Normalerweise müssten sowohl Basisstation BS als auch Teilnehmer-Endgerät MS wissen, welche Konstellation gerade gewählt wurde, welcher Modus also gerade aktiv ist. Dies könnte grundsätzlich über eine spezielle, explizite Signalisierung zwischen Basisstation BS und Teilnehmer-Endgerät MS festgelegt werden. Dies würde jedoch das Protokoll des Rückkopplungskanal unnötig verkomplizieren und einen entsprechenden Datenoverhead verursachen. Außerdem würde sich dadurch eine zusätzliche Fehlerquelle im Mobilfunksystem ergeben, da Fehler in dieser Signalisierung große Auswirkungen auf die Effektivität der Datenübertragung im Mobilfunksystem hätten.

Eine Alternative zu der Möglichkeit einer expliziten Signalisierung um einen der den möglichen Modi auszuwählen soll nun beschrieben werden. Es werden dafür, wie in FIG 3 dargestellt, sechs Punkte auf der Einheitskugel betrachtet, die in drei Gruppen zu jeweils zwei gegenüberliegenden Punkten zusammengefasst sind. Es ist natürlich auch je nach Bedarf eine größere Zahl von Gruppen möglich. Diese Gruppen sind dann zumindest für einen gewissen Zeitraum fest vorgegeben und sowohl dem Teilnehmer-Endgerät MS als auch der Basisstation BS bekannt.

In den Rückkopplungsinformationen werden drei Arten von Bits definiert, die sich in zyklischer Abfolge wiederholen, wobei jeder der drei Gruppen von Punkten jeweils ein Bit zugeordnet ist. Somit kann jeweils mit jedem der Bits eine Wahl zwischen einem der beiden gegenüberliegenden Punkte getroffen werden. Die nachfolgende Tabelle veranschaulicht den Zusammenhang zwischen den Werten der drei Bits der Rückkopplungsinformationen und den entsprechenden Punkten auf der Einheitskugel, zunächst dargestellt in **z**-Koordinaten:

| Bit Nummer | +1 | -1 |
|---|---|---|
| 1 | ($z_1$, $z_2$, $z_3$) = (1, 0, 0) | ($z_1$, $z_2$, $z_3$) = ( -1, 0, 0) |
| 2 | ($z_1$, $z_2$, $z_3$) = (0, 1, 0) | ($z_1$, $z_2$, $z_3$) = (0, -1, 0) |
| 3 | ($z_1$, $z_2$, $z_3$) = (0, 0, 1) | ($z_1$, $z_2$, $z_3$) = (0, 0, -1) |

Die z-Koordinaten in der oben dargestellten Tabelle können auch ersetzt werden durch die entsprechende Darstellung analog Gleichung (1), woraus sich für die oben gewählten Gruppen von Punkten folgende Tabelle ergibt:

| Bit Nummer | +1 | -1 |
|---|---|---|
| 1 | $\mathbf{w} = \mathbf{v}_1$ | $\mathbf{w} = \mathbf{v}_2$ |
| 2 | $\mathbf{w} = \frac{1}{\sqrt{2}}\left(\mathbf{v}_1 + \mathbf{v}_2\right)$ | $\mathbf{w} = \frac{1}{\sqrt{2}}\left(\mathbf{v}_1 - \mathbf{v}_2\right)$ |
| 3 | $\overline{\mathbf{w} = \frac{1}{\sqrt{2}}\left(\mathbf{v}_1 + j\mathbf{v}_2\right)}$ | $\mathbf{w} = \frac{1}{\sqrt{2}}\left(\mathbf{v}_1 - j\mathbf{v}_2\right)$ |

Für jeden Zeitschlitz ermittelt das Teilnehmer-Endgerät MS, welcher der zwei Punkte der aktuellen Gruppe von Punkten dem optimalen Wert für ($u_1$, $u_2$) am nächsten kommt und übermittelt den entsprechenden Bitwert an die Basisstation BS. Dieser Vorgang wird von dem Teilnehmer-Endgerät MS ständig fortgeführt ohne weitere Signalisierung mit der Basisstation BS.

Nun ist es allein Aufgabe der Basisstation, auf Basis von Auswahlkriterien aus den empfangenen Rückkopplungsinformationen auszuwählen, wie viele der empfangenen Bits für die Bestimmung des Gewichtungsvektors zur Strahlformung verwendet werden. Dies erfolgt in Abhängigkeit von der ermittelten Geschwindigkeit des Teilnehmer-Endgerätes MS.

Ermittelt die Basisstation BS höhere Geschwindigkeiten für das Teilnehmer-Endgerät MS, so berücksichtigt sie nur das zuletzt empfangene Bit, um eine möglichst hohe Aktualität der Strahlformung zu garantieren. Es wird damit die gleiche Auflösung für den Gewichtungsvektor erreicht wie für den Fall einer Konstellation von nur zwei Punkten.

Ermittelt die Basisstation BS aber eine geringere Geschwindigkeit für das Teilnehmer-Endgerät MS, so kann die Basisstation BS bei ausreichender Aktualität der Strahlformung mehrere Bits der Rückkopplungsinformationen zur Bildung des Gewichtungsvektors berücksichtigen, was einer 4-Punkt-Konstellation oder 8-Punkt-Konstellation entspricht. Es erfolgt damit praktisch eine zeitliche Mittelung über mehrere der zuletzt ermittelten Punkte auf der Einheitskugel. Es wird also von der Basisstation BS die Zeit für die zeitliche Mittelung über diese Punkte bzw. die Filterlänge für die Auswertung der empfangenen Rückkopplungsinformationen dynamisch angepasst.

Die Entscheidung, welche Zeitdauer für die Mittelung bzw. welche Filterlänge gewählt werden soll, kann die Basisstation in Abhängigkeit von der ermittelten Geschwindigkeit des Teilnehmer-Endgerätes MS treffen, welche die Basisstation BS aus einer Dopplerfrequenz-Schätzung für die Uplink-Verbindung bestimmen kann.

Die Basisstation kann auch eine gewichtete Mittelung über die empfangenen Rückkopplungsinformationen erfolgen, wobei die Basisstation BS früher empfangenen Rückkopplungsinformationen aufgrund der geringeren Aktualität ein geringeres Gewicht geben kann als zuletzt empfangenen Rückkopplungsinformationen. Grundsätzlich sind aber auch andere geeignete Arten von Gewichtungen denkbar.

Dieses Verfahren hat den Vorteil einer relativ einfachen Arbeitsweise des Teilnehmer-Endgerätes MS, eine einfache Form des Protokolls der Rückkopplungsinformationen und eines einfachen Zusammenhangs zwischen der Geschwindigkeit des Teilnehmer-Endgerätes MS und der Menge der berücksichtigten Rückkopplungsinformationen, die zur Bildung des jeweils aktuellen Gewichtungsvektors herangezogen werden.

Diese Methode, bei der eine Mittelung über mehrere Punkte auf der Einheitskugel ausgewählt werden kann, kann bei Bedarf und soweit es die Anforderungen an die Aktualität der Informationen zulassen, noch weiter verbessert werden. Wenn sich das Teilnehmer-Endgerät mit sehr geringer Geschwindigkeit bewegt oder überhaupt nicht bewegt, dann bietet eine Mittelung über mehr als drei Punkte in der Regel keinen zusätzlichen Informationsgewinn, da sich nach drei Bit die Bitart zyklisch wiederholt und aufgrund der geringen Geschwindigkeit praktisch keine Änderung des Bitwertes zu erwarten ist. Eine prinzipiell mögliche Mittelung über mehr als drei Bit bietet dann keine Verbesserung der Schätzung der optimalen Werte für ($u_1$, $u_2$). Dies resultiert insbesondere aus der Tatsache, dass bislang bei jeder Auswahl eines Bitwertes wie anhand FIG 3 beschrieben letztlich eine Quantisierung einer der möglichen z-Koordinaten in die Werte +1 oder -1 erfolgt:

$$bit_1 = \begin{cases} -1 & : & z_1(u_1, u_2) \geq 0 \\ +1 & : & z_1(u_1, u_2) < 0 \end{cases} \qquad (7)$$

Eine Alternative zu einer solchen Quantisierung bietet die Methode der statistischen Modulation. Die vom Teilnehmer-Endgerät MS übertragen Bitwerte werden nach einer Wahrscheinlichkeitsverteilung ausgewählt, wobei die Wahrscheinlichkeit, dass ein Bit den Wert

+1 oder -1 annimmt, von dem aktuell vom Teilnehmer-Endgerät ermittelten optimalen Wert des Gewichtungsvektors abhängt:

$$\Pr\{bit_1 = -1\} = 1 - \Pr\{bit_1 = +1\} = f(z_1(u_1, u_2)). \qquad (8)$$

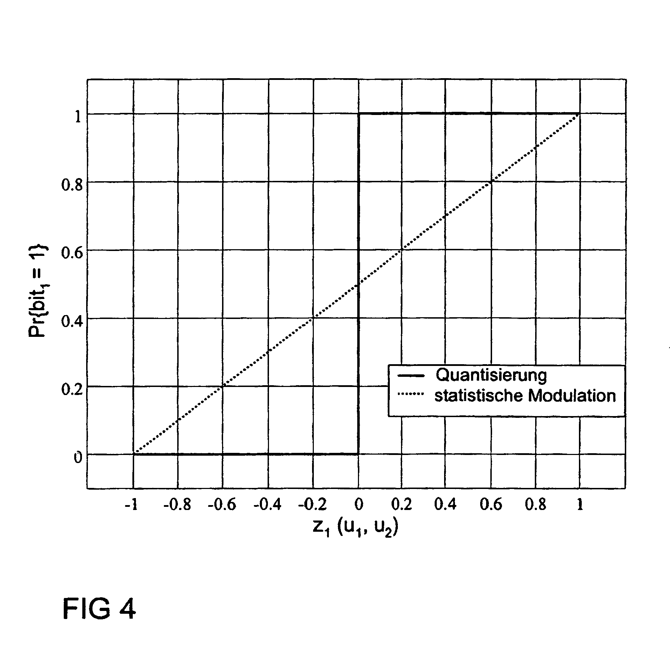

Dies ist in FIG 4 anschaulich dargestellt. Mit dieser Methode kann eine Mittelung der Punkte der Konstellation bzw. der übertragenen Rückkopplungsinformationen über längere Zeiträume erfolgen, wobei über längere Zeiträume eine quasi-kontinuierliche Verteilung der übermittelten Werte erzielt werden kann. Damit ist eine kontinuierliche Verbesserung der Schätzgenauigkeit für den Gewichtungsvektor möglich.

Die grundsätzliche Regel für die Wahl der Zeitdauer der Mittelung bzw. der Filterlänge seitens der Basisstation besagt, dass die Genauigkeit der Schätzung sich in derselben Größenordnung bewegen sollte wie die mittlere Positionsänderung der Werte für ($u_1$, $u_2$) pro Zeitschlitz. Diese Änderung kann aus dem Nyquist-Theorem abgeleitet werden, welches besagt, dass eine vollständige Änderung eines Passband-Signalwertes nur $2W$ Mal pro Sekunde möglich ist, wobei $W$ die Frequenzbandbreite in Hertz darstellt. Im Fall eines Jakes-Leistungsspektrums ergibt sich also die Zeit zwischen unabhängigen Signalwerten zu:

$$T = \frac{1}{2f_{d\,max}}. \qquad (9)$$

Es sollen noch kurz die Auswirkungen des vorgeschlagenen Verfahrens auf eine Kanalschätzung mit Hilfe von Trainingssequenzen betrachtet werden.

Eine Möglichkeit der Kanalschätzung für einen dedizierten Kanal durch das Teilnehmer-Endgerät MS basiert darauf, dass ein entsprechender Vektor der Kanalschätzwerte mit Hilfe von Trainingssequenzen eines Common Pilot Channels (CPICH) und basierend auf dem Gewichtungsvektor, welcher von der Basisstation BS angewandt wurde, erhalten werden kann. Hierfür muss grundsätzlich das Teilnehmer-Endgerät MS für jeden Zeitschlitz wissen, welche Kombination der Eigenvektoren verwendet wurde. Wenn eine dynamische Anpassung der Auswahl der Rückkopplungsinformationen erfolgt, wie sie oben beschrieben wurde, hat das Teilnehmer-Endgerät MS zwei Möglichkeiten, diese Kombination zu bestimmen: Das Teilnehmer-Endgerät MS kann die entsprechende, von der Basisstation BS angewandte Filterlänge basierend auf einer eigenen Schätzung des Teilnehmer-Endgerätes über die eigene Geschwindigkeit schätzen. Oder es kann entweder die Basisstation BS das Teilnehmer-Endgerät MS oder das Teilnehmer-Endgerät MS die Basisstation BS über das Ergebnis einer Geschwindigkeitsschätzung für die.Geschwindigkeit des Teilnehmer-Endgerät MS informieren, so dass sowohl in der Basisstation BS als auch in dem Teilnehmer-Endgerät MS diese Kenntnis vorliegt und dann in beiden Instanzen aufgrund von bekannten Parametern des Verfahrens die Kenntnis über die von der Basisstation BS zu wählende Filterlänge vorliegt. Die Ermittlung der Geschwindigkeit des Teilnehmer-Endgerät MS muss also nicht immer zwingend in der Basisstation BS erfolgen, sondern kann alternativ auch in dem Teilnehmer-Endgerät MS oder auch grundsätzlich in anderen Instanzen des Funk-Kommunikationssystems erfolgen.

Alternativ zu den vorgenannten Möglichkeiten kann aber auch eine Blindanpassung (blind adaptation) erfolgen. Diese Blindanpassung kann basierend auf einem Verfahren der sogenannten Gewichtungsverifikation (weight verification) erfolgen. Üblicherweise ist dieses Verfahren dazu bestimmt, Fehler in dem Rückkopplungskanal zu ermitteln. Dieses Verfahren läuft wie folgt ab: Das Teilnehmer-Endgerät MS erhält zwei Kanalschätzungen, eine basierend auf dem Common Pilot Channel CPICH, eine basierend auf Trainingssequenzen innerhalb des dedizierten Kanals selbst. Wenn nun die Ergebnisse beide Kanalschätzungen voneinander abweichen, liegt mit hoher Wahrscheinlichkeit ein Übertragungsfehler vor. Wenn aber diese Abweichungen der Ergebnisse beider Kanalschätzungen dauerhaft bestehen, so kann das Teilnehmer-Endgerät MS daraus schließen, dass seine Filtereinstellungen von denen der Basisstation BS abweichen. Nachdem nur eine begrenzte und genau definierte Zahl von Filtereinstellungen nach dem oben genannten Verfahren möglich sind, kann das Teilnehmer-Endgerät MS die Ergebnisse beider Kanalschätzungen relativ einfach dazu verwenden, seine Filtereinstellungen mit denen der Basisstation BS wieder zu synchronisieren.

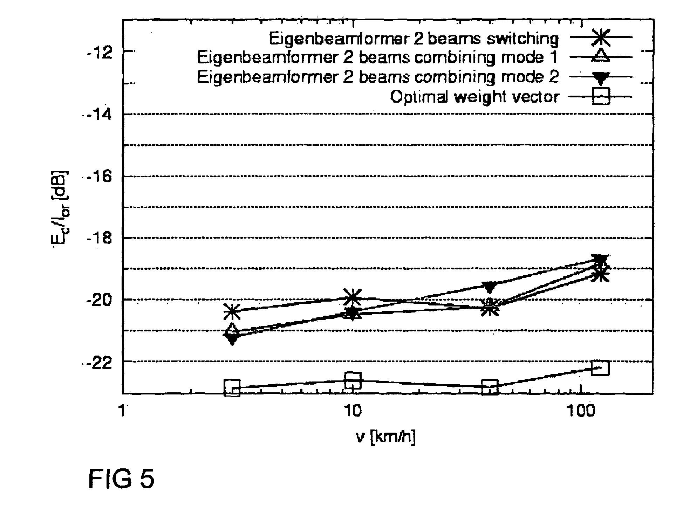

Figur 5 zeigt die Ergebnisse des dargestellten Verfahrens für verschiedene Konstellationen als Funktion der Geschwindigkeit des Teilnehmer-Endgerätes MS und gemessen als Wert des Verhältnisses $E_c/I_{or}$ (erforderliche Leistung für eine Verbindung zwischen Basisstation und Teilnehmer-Endgerät bezogen auf die gesamte Leistung der Basisstation)welches erforderlich ist, um an dem Teilnehmer-Endgerät eine Fehlerrate pro Zeitschlitzrahmen von 1 % zu erzielen (je geringer dieser Wert, desto besser ist das Ergebnis. Die mit Sternen gekennzeichnete Linie entspricht einer Zwei-Punkte-Konstellation, die mit umrandeten Dreiecken (Spitze jeweils nach oben) gekennzeichnete Linie entspricht einer Vier-Punkte-Konstellation. Die mit ausgefüllten Dreiecken gekennzeichnete Linie (Spitze jeweils nach unten) entspricht einer 16-Punkte-Konstellation. Die mit Quadraten gekennzeichnete Linie beschreibt die Ergebnisse, die bei einer optimalen Kombination der Eigenvektoren, also mit einem optimalen Gewichtungsvektor, erzielt werden könnten und stellt als solche einen Grenzwert für die erzielbaren Ergebnisse dar. Das Vorliegen von Kreuzungspunkten der genannten Linien für die einzelnen Konstellationen zeigt, dass die optimale Zahl der Punkte für die zu wählende Konstellation von der Geschwindigkeit des Teilnehmer-Endgerätes MS abhängt.

**Patentansprüche**

1. Verfahren zum Steuern einer Strahlformung eines Nachrichtensignals in einem Funk-Kommunikationssystem, welches von einer Basisstation (BS) an ein Teilnehmer-Endgerät (MS) ausgestrahlt wird, wobei

- die Strahlformung auf Basis von Strahlformungsparametern erfolgt, die von dem Teilnehmer-Endgerät (MS) ermittelt und als Rückkopplungsinformationen an die Basisstation (BS) übertragen werden,
- von der Basisstation (BS) in Abhängigkeit von ermittelten zeitlichen Änderungen der Empfangsverhältnisse am Teilnehmer-Endgerät (MS) oder von einer ermittelten Geschwindigkeit des Teilnehmer-Endgerätes (MS) definierte Rückkopplungsinformationen (Bit #1, Bit #2, Bit #3) ausgewählt werden, und
- die ausgewählten Rückkopplungsinformationen (Bit #1, Bit #2, Bit #3) für die Strahlformung berücksichtigt werden.

**dadurch gekennzeichnet, dass**
als die Rückkopplungsinformationen (Bit #1, Bit #2, Bit #3) quantisierte Einstellungen von Linearkombinationen von Eigenvektoren einer von dem Teilnehmer-Endgerät (MS) ermittelten räumlichen Kovarianzmatrix der Ausstrahlung des Nachrichtensignals an das Teilnehmer-Endgerät (MS) repräsentierende Informationen übertragen werden, wobei eine Transformation ($z(u)$) von Komponenten der Linearkombinationen auf eine Kugelfläche in einem reelwertigen Koordinatenraum erfolgt, und wobei die quantisierten Einstellungen auf der Kugelfläche liegende Koordinatenpunkte repräsentieren.

2. Verfahren nach Anspruch 1,
**dadurch gekennzeichnet,**
**dass** von der Basisstation (BS) in Abhängigkeit von ermittelten zeitlichen Änderungen der Empfangsverhältnisse und/oder in Abhängigkeit von einer ermittelten Geschwindigkeit des Teilnehmer-Endgerätes (MS) eine variable Menge von Dateneinheiten (Bit #1, Bit #2, Bit #3) der Rückkopplungsinformationen ausgewählt und für die Strahlformung berücksichtigt wird.

3. Verfahren nach Anspruch 1 oder 2,
**dadurch gekennzeichnet,**
**dass** durch die Basisstation (BS) eine unterschiedliche Gewichtung verschiedener Dateneinheiten (Bit #1, Bit #2, Bit #3) der ausgewählten Rückkopplungsinformationen erfolgt.

4. Verfahren nach Anspruch 3,
**dadurch gekennzeichnet,**
**dass** die Gewichtung abhängig von der Empfangszeit der Dateneinheiten (Bit #1, Bit #2, Bit #3) an der Basisstation (BS) erfolgt.

5. Verfahren nach einem der Ansprüche 1 bis 4,
**dadurch gekennzeichnet,**
**dass** die Geschwindigkeit des Teilnehmer-Endgerätes (MS) aus Parametern einer Übertragung eines Funksignals von dem Teilnehmer-Endgerät (MS) zu der Basisstation (BS) ermittelt wird.

6. Verfahren nach Anspruch 1,
**dadurch gekennzeichnet,**
**dass** jede Dateneinheit (Bit #1, Bit #2, Bit #3) der Rückkopplungsinformationen ein Paar einander bezüglich des Zentrums der Kugelfläche gegenüberliegender Koordinatenpunkte auf der Kugelfläche repräsentiert.

7. Funk-Kommunikationssystem, mit Einrichtungen (BFCU) zum Steuern einer Strahlformung eines Nachrichtensignals, welches von einer Basisstation (BS) des Funk-Kommunikationssystems an ein Teilnehmer-Endgerät (MS) ausgestrahlt wird, mit

- Einrichtungen (FEU) zur Ermittlung von Strahlformungsparametern als Rückkopplungsinformationen (Bit #1, Bit #2, Bit #3), wobei als die Rückkopplungsinformationen (Bit #1, Bit #2, Bit #3) quantisierte Einstellungen von Linearkombinationen von Eigenvektoren einer von dem Teilnehmer-Endgerät (MS) ermittelten räumlichen Kovarianzmatrix der Ausstrahlung des Nachrichtensignals an das Teilnehmer-Endgerät (MS) repräsentierende Informationen übertragen werden, und wobei eine Transformation (z(u)) von Komponenten der Linearkombinationen auf eine Kugelfläche in einem reellwertigen Koordinatenraum erfolgt, und wobei die quantisierten Einstellungen auf der Kugelfläche liegende Koordinatenpunkte repräsentieren, und

- Antennenelementen (AE1, AE2, AE3, AE4) zur Strahlformung auf Basis der Rückkopplungsinformationen (Bit #1, Bit #2, Bit #3),

- Einrichtungen (VDU) zur Ermittlung von zeitlichen Änderungen der Empfangsverhältnisse am Teilnehmer-Endgerät (MS) oder zur Ermittlung einer Geschwindigkeit des Teilnehmer-Endgerätes (MS), die mit den Einrichtung (BFCU) zum Steuern der Strahlformung datentechnisch verbunden sind, wobei

- die Einrichtungen (FEU) zur Ermittlung der Strahlformungsparameter ausgebildet sind zur Festlegung von Auswahlkriterien zur Auswahl definierter Rückkopplungsinformationen (Bit #1, Bit #2, Bit #3) in Abhängigkeit von ermittelten zeitlichen Änderungen der Empfangsverhältnisse.an einem Teilnehmer-Endgerät (MS) oder einer ermittelten Geschwindigkeit des Teilnehmer-Endgerätes (MS), und

- die Einrichtungen (BFCU) zum Steuern der Strahlformung ausgebildet sind zur Berücksichtigung der ausgewählten Rückkopplungsinformationen (Bit #1, Bit #2, Bit #3) für die Strahlformung.

**Claims**

1. Method for controlling a beam formation of a message signal in a radio communication system, which is emitted from a base station (BS) to a subscriber terminal (MS), in which

- the beam is formed on the basis of beam formation parameters which are determined by the subscriber terminal (MS) and are transmitted to the base station (BS) as feedback information,
- defined feedback information (Bit#1, Bit#2, Bit#3) is selected by the base station (BS) as a function of determined temporal changes in the receive conditions at the subscriber terminal (MS) or a determined speed of the subscriber terminal (MS), and
- the selected feedback information (Bit #1, Bit #2, Bit #3) is taken into account for the beam formation,

**characterised in that**
information representing quantised settings of linear combinations of eigenvectors of a spatial covariance matrix of the emission of the message signal to the subscriber terminal (MS) as determined by the subscriber terminal (MS) is transmitted as the feedback information (Bit #1, Bit#2, Bit#3), with components of the linear combinations being transformed (z(u)) to a spherical surface in a real-value coordinate space and with the quantised settings representing coordinate points disposed on the spherical surface.

2. Method according to claim 1
**characterised in that**
a variable quantity of data units (Bit #1, Bit #2, Bit #3) of the feedback information is selected and taken into account for beam formation by the base station (BS) as a function of determined temporal changes in the receive conditions and/or as a function of a determined speed of the subscriber terminal (MS).

3. Method according to claim 1 or 2
**characterised in that**
the base station (BS) weights various data units (Bit #1, Bit #2, Bit #3) of the selected feedback information differently.

4. Method according to claim 3,
**characterised in that**
the weighting takes place as a function of the receive time of the data units (Bit #1, Bit #2, Bit #3) at the base station (BS).

5. Method according to one of claims 1 to 4
**characterised in that**
the speed of the subscriber terminal (MS) is determined from parameters of a transmission of a radio signal from the subscriber terminal (MS) to the base station (BS).

**6.** Method according to claim 1
**characterised in that**
each data unit (Bit #1, Bit #2, Bit #3) of the feedback information represents a pair of coordinate points on the spherical surface, said coordinate points lying opposite each other in relation to the centre of the spherical surface.

**7.** Radio communication system, with devices (BFCU) to control a beam formation of a message signal, which is emitted from a base station (BS) of the radio communication system to a subscriber terminal (MS), having

- devices (FEU) to determine beam formation parameters as feedback information (Bit #1, Bit #2, Bit #3), with information representing quantised settings of linear combinations of eigenvectors of a spatial covariance matrix of the emission of the message signal to the subscriber terminal (MS) as determined by the subscriber terminal (MS) being transmitted as feedback information (Bit #1, Bit #2, Bit #3), and with components of the linear combinations being transformed to a spherical surface in a real-value coordinate space and with the quantised settings representing coordinate points disposed on the spherical surface, and,
- antenna elements (AE1, AE2, AE3, AE4) for beam formation on the basis of the feedback information (Bit #1, Bit #2, Bit #3)
- devices (VDU) for determining temporal changes in the receive conditions at the subscriber terminal (MS) or to determine a speed of the subscriber terminal (MS), which are connected in a data-specific manner to the device (BFCU) for controlling the beam formation, with
- the devices (FEU) for determining the beam formation parameters being configured to define selection criteria for the selection of defined feedback information (Bit #1, Bit #2, Bit #3) as a function of determined temporal changes in the receive conditions at a subscriber terminal (MS) or a determined speed of the subscriber terminal (MS), and
- the devices (BFCU) for controlling the beam formation being configured to take the selected feedback information (Bit #1, Bit #2, Bit #3) into account for the beam formation.

**Revendications**

**1.** Procédé pour la commande d'une conformation de faisceau d'un signal de communication dans un système de communication radio, qui est envoyé par une station de base (BS) à un terminal d'abonné (MS),

- la conformation de faisceau s'effectuant sur la base de paramètres de conformation de faisceau, qui sont déterminés par le terminal d'abonné (MS) et sont transmis sous la forme d'informations de réaction à la station de base (BS),
- la station de base (BS) sélectionnant des informations de réaction définies (bit #1, bit #2, bit #3) en fonction de variations dans le temps déterminées des conditions de réception sur le terminal d'abonné (MS) ou d'une vitesse déterminée du terminal d'abonné (MS), et
- les informations de réaction choisies (bit #1, bit #2, bit #3) étant prises en compte pour la conformation de faisceau,

**caractérisé en ce que** des informations représentant sous la forme d'informations de réaction (bit #1, bit #2, bit #3) des réglages quantifiés de combinaisons linéaires de vecteurs propres d'une matrice de covariance spatiale, déterminée par le terminal d'abonné (MS), de l'envoi du signal de communication au terminal d'abonné (MS) sont transmises, une transformation (z (u)) des composants des combinaisons linéaires en une surface sphérique s'effectuant dans un espace de coordonnées à valeurs réelles et les réglages quantifiés représentant des points de coordonnées situés sur la surface sphérique.

**2.** Procédé selon la revendication 1,
**caractérisé en ce que**
la station de base (BS) prend en compte en fonction de variations dans le temps calculées des conditions de réception et/ou en fonction d'une vitesse déterminée du terminal d'abonné (MS) une quantité variable d'unités de données (bit #1, bit #2, bit #3) des informations de réaction et pour la conformation de faisceau.

**3.** Procédé selon la revendication 1 ou 2,
**caractérisé en ce que** la station de base (BS) effectue une pondération différente de diverses unités de données (bit #1, bit #2, bit #3) des informations de réaction choisies.

**4.** Procédé selon la revendication 3,
**caractérisé en ce que** la pondération s'effectue en fonction du temps de réception des unités de données (bit #1, bit #2, bit #3) sur la station de base (BS).

**5.** Procédé selon l'une quelconque des revendications 1 à 4,
**caractérisé en ce que** la vitesse du terminal d'abonné (MS) est déterminée à partir de paramètres d'une transmission d'un signal radio du terminal d'abonné (MS) à la station de base (BS).

**6.** Procédé selon la revendication 1,
**caractérisé en ce que** chaque unité de données (bit #1, bit #2, bit #3) des informations de réaction représente une paire de points de coordonnées se faisant face par rapport au centre de la surface sphérique sur la surface sphérique.

**7.** Système de communication radio, comprenant des équipements (BFCU) pour la commande d'une conformation de faisceau d'un signal de communication, lequel est envoyé par une station de base (BS) du système de communication radio à un terminal d'abonné (MS),

- des équipements (FEU) pour la détermination de paramètres de conformation de faisceau en tant qu'informations de réaction (bit #1, bit #2, bit #3), des informations représentant sous la forme d'informations de réaction (bit #1, bit #2, bit #3) des réglages quantifiés de combinaisons linéaires de vecteurs propres d'une matrice de covariance spatiale, déterminée par le terminal d'abonné (MS), de l'envoi du signal de communication au terminal d'abonné (MS) étant transmises et une transformation (z(u)) de composants des combinaisons linéaires en une surface sphérique s'effectuant dans un espace de coordonnées à valeurs réelles, et les réglages quantifiés représentant des points de coordonnées disposés sur la surface sphérique,
- des éléments d'antenne (AE1, AE2, AE3, AE4) pour la conformation de faisceau sur la base des informations de réaction (bit #1, bit #2, bit #3),
- des équipements (VDU) pour le calcul de variations dans le temps des conditions de réception sur le terminal d'abonné (MS) ou pour le calcul d'une vitesse du terminal d'abonné (MS), qui sont reliés par informatique à l'équipement (BFCU) pour la commande de la conformation de faisceau,
- les équipements (FEU) pour la détermination des paramètres de conformation de faisceau étant réalisés pour la fixation de critères de sélection pour le choix d'informations de réaction définies (bit #1, bit #2, bit #3) en fonction de variations dans le temps déterminées des conditions de réception sur un terminal d'abonné (MS) ou d'une vitesse déterminée du terminal d'abonné (MS), et
les équipements (BFCU) pour la commande de la conformation de faisceau étant réalisés pour la prise en compte des informations de réaction choisies (bit #1, bit #2, bit #3) pour la conformation de faisceau.

FIG 1

FIG 2

FIG 3

FIG 4

FIG 5